(19) Europäisches Patentamt / European Patent Office / Office européen des brevets

(11) **EP 3 554 862 B1**

(12) **FASCICULE DE BREVET EUROPEEN**

(45) Date de publication et mention de la délivrance du brevet:
**30.03.2022   Bulletin 2022/13**

(21) Numéro de dépôt: **17821699.0**

(22) Date de dépôt: **08.12.2017**

(51) Classification Internationale des Brevets (IPC):
*B60C 23/00* *(2006.01)*    *B60C 23/20* *(2006.01)*

(52) Classification Coopérative des Brevets (CPC):
**B60C 23/20; B60C 23/00**

(86) Numéro de dépôt international:
**PCT/FR2017/053472**

(87) Numéro de publication internationale:
**WO 2018/109336 (21.06.2018 Gazette 2018/25)**

(54) **PROCÉDÉ ET SYSTÈME D'ESTIMATION DE LA SÉVÉRITÉ DE CONDITIONS D'UTILISATION D'UN PNEUMATIQUE**

VERFAHREN UND DESSEN SYSTEM ZUR FESTSTELLUNG DER SCHWERERATE EINES REIFENS ABHÄNGIG VON DEN BETRIEBSBEDINGUNGEN

METHOD AND SYSTEM OF ESTIMATION OF TIRE SEVERITY RATE IN RESPONSE TO CONDITIONS OF USE OF A TIRE.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **15.12.2016   FR 1662533**

(43) Date de publication de la demande:
**23.10.2019   Bulletin 2019/43**

(73) Titulaire: **Compagnie Générale des Etablissements Michelin**
**63000 Clermont-Ferrand (FR)**

(72) Inventeur: **DELACROIX, Serge**
**63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**US-A1- 2010 132 445    US-A1- 2016 229 234**

EP 3 554 862 B1

**Description**

DOMAINE DE L'INVENTION

La présente invention concerne les conditions d'utilisation de pneumatiques de véhicules routiers, notamment les pneumatiques des véhicules tractés de transport routier. Elle concerne en particulier un procédé et un système d'évaluation de la sévérité de ces conditions d'utilisation.

On a constaté que, lors du roulage d'une semi-remorque, les dissipations thermiques internes des pneumatiques provoquaient un échauffement. Or, une température interne élevée maintenue pendant une période de temps prolongée provoque une dégradation des matériaux formant le pneumatique, notamment les gommes et les renforts.

Les véhicules précédemment mentionnés sont généralement muni d'un calculateur de freinage, également appelé TEBS (Trailer Electronic Braking System) qui permet d'assurer différentes fonctions telles que la régulation d'assiette, la mesure de charge, la modulation des commandes de freinage, ou encore la fonction d'antiblocage des roues au freinage.

Le véhicule peut aussi être muni d'un système télématique qui agrège et transmet des informations géographiques, de charge et de vitesse.

Toutefois, à ce jour, ces calculateurs ne fournissent aucune information concernant les conditions d'utilisation d'un pneumatique pouvant conduire à un échauffement et donc à un vieillissement prématuré des pneumatiques. Or, la connaissance de ces conditions d'utilisation pourrait être utile à un transporteur ou gestionnaire de flotte pour lui permettre d'optimiser sa monte, ou à un prestataire pour optimiser des offres de service à destination de transporteurs ou gestionnaires de flottes pneumatique.

On connait, de la demande WO 2008046766 A1 un procédé d'indication du vieillissement subi par un pneumatique, dans lequel on mesure une température localement au moins en un point du pneumatique. Toutefois, ce procédé nécessite l'installation d'un capteur de température directement dans le pneumatique, ce qui s'avère intrusif pour la fabrication du pneumatique, et qui engendre des coûts supplémentaires.

La divulgation US 2016/229234A1 relate pour sa part d'un système de management d'état d'anormalité de pneumatiques en fonction de la charge de ces pneumatiques, de la vitesse du vehicule, de la température des pneumatiques et de la distance parcourue.

Il est possible en théorie de recalculer l'historique thermique a posteriori si on a enregistré tout l'historique temporel (charges, vitesses). Toutefois, cela oblige à stocker ou transmettre une grande quantité de données, car l'ordre temporel importe.

La présente invention vise ainsi à fournir un procédé et un système pour évaluer la sévérité de conditions d'utilisation d'un pneumatique tout en remédiant aux inconvénients précédemment cités.

BREVE DESCRIPTION DE L'INVENTION

Ainsi, l'invention concerne un procédé d'estimation de la sévérité de conditions d'utilisation d'un pneumatique installé sur un véhicule, le procédé comprenant les étapes suivantes :

- Une étape de mesure de la vitesse du véhicule et de la charge du véhicule,

- Une étape d'évaluation, en fonction des mesures effectuées, de la puissance des dissipations thermiques internes du pneumatiques, et

- Une étape de détermination, en fonction de cette puissance, de la température interne du pneumatique.

- Une étape d'enregistrement du nombre de tours de roue effectués et/ou du temps passé et de mise à jour du décompte de cycles et temps par classe de température.

Le terme « température interne » du pneumatique doit être entendu comme la température au sein d'un matériau constituant l'architecture du pneumatique.

L'invention décrite consiste à calculer une estimation de la température du pneu dans le calculateur embarqué en temps réel, en mettant à jour un modèle thermique selon les mesures transmises par les capteurs au calculateur et agréger un descripteur de sévérité thermique compact et synthétique, au lieu de transmettre un flot de données.

Ce procédé est avantageusement mis en œuvre par un système d'estimation selon l'invention, comprenant un calculateur embarqué et des moyens d'enregistrement de données. Le calculateur de freinage comporte différentes fonctionnalités, permettant

- La mesure de la vitesse du véhicule et de la charge du véhicule,

- L'évaluation, en fonction des mesures effectuées, de la puissance des dissipations thermiques internes du pneumatiques, et

- La détermination, en fonction de cette puissance, de la température interne du pneumatique.

Le calculateur embarqué mis en œuvre dans la présente invention peut être un calculateur de freinage, ou un calculateur intégré dans un boitier télématique installé dans le véhicule, ou tout autre calculateur propre au véhicule. En effet, il suffit que le calculateur puisse recevoir des données concernant la charge et la vitesse du véhicule, données disponibles sur le bus de données du véhicule après mesure par des capteurs embarqués.

En effet, les calculateurs de freinage classiquement installés sur les semi-remorques comprennent des moyens pour déterminer la charge et la vitesse instantanée de chaque essieu. Partant de ces informations, il devient possible d'évaluer les sources thermiques internes au pneumatique, ainsi que les coefficients de convection thermique avec l'air ambiant.

Dans un procédé selon l'invention, on peut ensuite utiliser, pour évaluer la température interne du pneumatique, un modèle numérique thermique du pneumatique, résolu en temps réel selon les mesures de charge, vitesse et les températures disponibles. De manière avantageuse, on utilise un modèle générique, correspondant à un pneu classiquement utilisé, à une position sur le véhicule, avant ou arrière, et au véhicule considéré. En effet, la présente invention ne vise pas à fournir une durée de vie restante pour un pneu réel, mais une information sur la sévérité des conditions d'usage.

On a ainsi constaté que cette information pouvait être obtenue à partir d'un modèle générique, sans qu'il soit nécessaire de l'adapter à chaque pneumatique spécifique, ni qu'il soit nécessaire de mettre à jour les paramètres du modèle au fur et à mesure de l'usure du pneumatique.

Ce modèle numérique, dont la résolution sera ultérieurement détaillée, est mis en œuvre par exemple par un calculateur embarqué dans le véhicule. Or, il est utile de pouvoir limiter la puissance de calcul mise en œuvre, pour ne pas empêcher le calculateur d'effectuer les autres opérations pour lesquelles il est utilisé. A cet effet il est possible de réduire les équations et les degrés de libertés du modèle thermique aux directions où se produisent les gradients thermiques les plus forts. Ainsi, le gradient circonférentiel est sensiblement nul et le gradient méridien faible dans la zone d'intérêt. Le gradient normal à la surface du pneumatique est prépondérant dans les flux de chaleur. Ainsi, le calcul des températures se réduit à un profil dans l'épaisseur et peut s'envisager sans grande ressources en temps de calcul.

De même, l'intervalle temporel de mise à jour des températures est assez long pour ne pas consommer beaucoup de puissance de calcul et assez court pour capter des transitoires de vitesse du véhicule, par exemple de 0.1s à 10s.

Le système comprend en outre des moyens d'enregistrement du nombre de tours de roue effectués dans des conditions d'utilisation correspondant à un intervalle de température donné. En effet, on a constaté que la fatigue mécanique d'un pneumatique est liée au nombre de cycles mécaniques, à leur amplitude et à la température à laquelle ils ont lieu. En général, l'élévation de température affecte négativement la résistance des matériaux. C'est pourquoi il est ici proposé d'estimer la sévérité d'usage en comptant les cycles (tours de roue) par classe de température, ou le temps passé par classe de température. Certains processus de dégradation chimique font aussi intervenir le temps passé à haute température. C'est pourquoi on compte aussi les temps passés par classe de température.

Dans un mode de réalisation particulier, le procédé comprend en outre une étape de mesure de la température ambiante. Dans un exemple de réalisation, cette étape est mise en œuvre par un capteur de température ambiante, par exemple installé dans le calculateur de freinage. De manière avantageuse, cette température ambiante est prise en compte pour l'évaluation de la puissance des dissipations thermiques ou pour tout autre calcul d'équilibre thermique.

Dans un autre mode de réalisation, pouvant être combiné avec le précédent, le procédé comprend une étape de mesure de la température interne. Cette mesure est par exemple effectuée, dans un système selon l'invention, par un dispositif de type TPMS (Tire Pressure Monitoring System) thermométrique.

Dans un mode de réalisation avantageux, un procédé selon l'invention comprend une étape de mesure de la température de la jante sur laquelle est installé le pneu. De manière avantageuse, cette étape est mise en œuvre par un capteur de température de la jante sur laquelle est installé le pneumatique.

Dans un mode de réalisation avantageux, un procédé selon l'invention comprend une étape de mise à zéro des enregistrements effectués lorsque l'installation d'un nouveau pneumatique est détectée.

Ainsi que précédemment indiqué, l'invention vise à fournir non seulement un moyen d'évaluation de la sévérité des conditions d'utilisation, mais également à transformer cette information en données exploitables pour un utilisateur.

Ainsi, un système selon l'invention comporte, dans une réalisation avantageuse, des moyens pour construire, en fonction des informations enregistrées, un histogramme de temps et de nombre de cycles par classe de température, et des moyens pour afficher cet histogramme dans un outil de diagnostic.

Il est également possible, en fonction des informations enregistrées, de proposer plusieurs applications mises à disposition d'un gestionnaire de flotte, par exemple une alerte vieillissement d'un pneumatique, permettant au gestionnaire de savoir qu'il est temps de changer les pneumatiques d'un véhicule. On peut également envisager une alerte à destination d'un conducteur, lorsque les informations enregistrées montrent une sévérité d'utilisation des pneumatiques inhabituelles, et ce, indépendamment de l'état d'usure des pneumatiques.

Dans un autre mode de réalisation, on utilise une approche de cinétique arrhénienne ou apparentée pour estimer la consommation de substances protectrices présentes dans les gommes d'un pneumatique et/ou le vieillissement des matériaux composant le pneumatique, et donc la dégradation des pneumatiques.

Dans un autre exemple, le calculateur de freinage transmet les informations enregistrées vers un système télématique du véhicule ou un terminal mobile, la transmission étant effectuée via un bus CAN ou par radiofréquence.

Dans un autre exemple, le calcul décrit est effectué par un calculateur ayant accès aux flux de données de charge, de vitesse, et le cas échéant de température par le bus CAN, cela pouvant être le cas d'un calculateur télématique.

BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :

- la figure 1 montre une section de pneumatique,

- la figure 2 montre un exemple de courbes isothermes au sein d'un pneumatique,

- la figure 3 montre un schéma des échanges thermiques au sein d'un pneumatique,

- la figure 4 montre l'évolution de la température interne d'un pneumatique lors d'une séquence de roulage,

DESCRIPTION DU MEILLEUR MODE DE REALISATION DE L'INVENTION

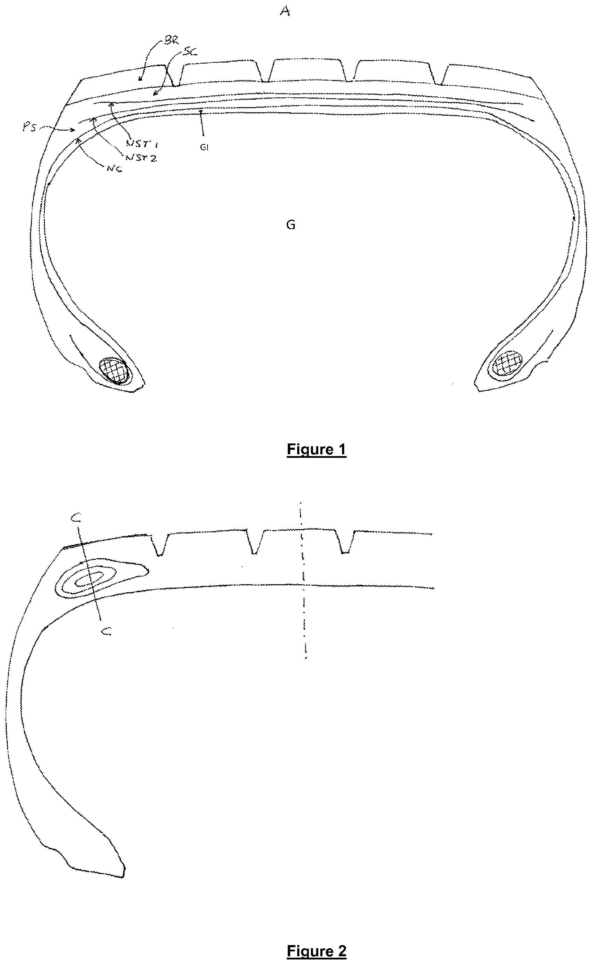

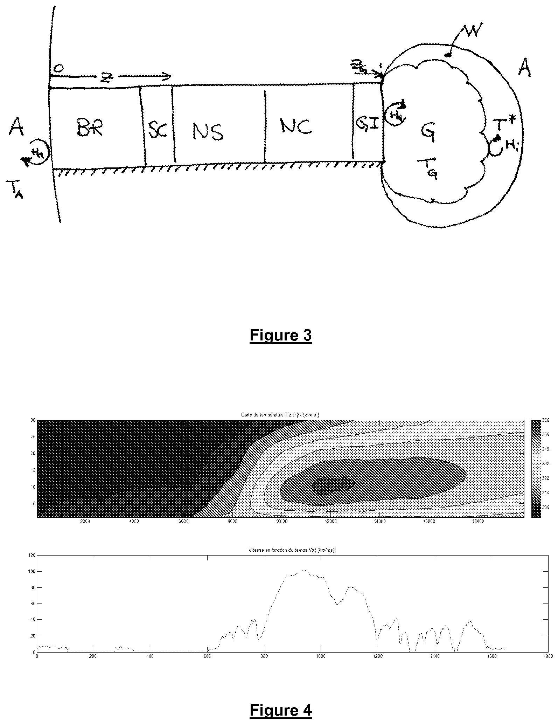

La figure 1 montre une section méridienne d'un pneumatique poids lourd et l'architecture simplifiée de ses composants. La figure 2 montre l'emboitement des isothermes autour d'un extremum de température situé à l'épaule. La coupe CC traverse la zone d'extremum. Le long de cette ligne, les gradients de température dans les sens circonférentiels et méridiens sont très faibles et les flux de chaleur sont sensiblement colinéaires à la ligne C-C. La figure 3 montre schématiquement les échanges thermiques au sein d'un pneumatique similaire à celui de la figure 1. Les références utilisées sur la figure 1 et 3 représentent donc les mêmes éléments.

On représente le fonctionnement thermique simplifié de cette zone réduit à une dimension comme un empilage de couches de matériaux caractérisés chacune (a) par leur propriétés thermiques (conductivité, capacité calorifique volumique) et (b) par un estimateur des sources volumiques de dissipation en fonction de la charge, de la vitesse, de la température courante locale et du freinage du pneu. Cette fonction est établie par mesure réelle ou basée sur des simulations numériques complètes.

Typiquement, la conductivité thermique du mélange de gomme vaut 0.25 à 0.30 W/(K.m), sa densité est voisine de 1100 kg/m3, sa capacité calorifique massique de l'ordre de 1470 J/Kg/K.

Il est possible d'écrire cette fonction comme le produit d'une fonction unique P(z,v) dépendant de la charge z du pneu et de sa vitesse v , d'un facteur Q dépendant de la température locale et d'un coefficient constant $K_i$ par matériau : $P_i(z,v,T) = K_i.P(z,v).Q(T)$

Typiquement, la source P pour un pneu roulant à 10m/s (36 km/h) à 60°C vaut 2.5 E+4 W/m3 dans la bande de roulement, soit une dissipation de 7500 J/m3 par cycle. Cette source décroit avec la température, et croit avec la charge et la vitesse.

La figure 1 représente un exemple de pneumatique mais n'est pas limitative en ce que l'invention peut s'appliquer à des pneumatiques présentant des architectures différentes en termes de nombre et de nature des constituants.

Ainsi, la couche la plus extérieure du pneumatique est la bande de roulement BR, qui est en contact directement avec l'air ambiant A autour du véhicule sur lequel est installé un système selon l'invention. On précise ici que dans le cadre de l'invention, la température de cet air ambiant est par exemple mesuré par un capteur installé sur le véhicule, et peut être prise en compte dans la détermination de la température interne du pneumatique.

La bande de roulement est généralement accrochée à une sous-couche SC, assurant la liaison avec les nappes sommet. La sous-couche est généralement d'une composition différente de la bande de roulement. Cette sous-couche est installée sur des nappes sommet NS, qui comportent par exemple des éléments de renfort textiles ou métalliques. Ces nappes sommet NS se terminent par des pieds sommet PS, positionnés au-dessus des nappes carcasse, lesquelles reposent sur la gomme d'étanchéité GI du volume de gaz interne G, qui sont en contact direct avec le gaz interne G.

Ainsi, un gradient de température se crée au sein de l'architecture du pneumatique, du bloc BR jusqu'au gaz interne.

Le gaz interne, également appelé gaz de gonflage, est piégé entre le pneumatique et la roue. Des échanges thermiques s'effectuent donc entre ce gaz G et la roue R, qui est elle-même soumise à des échanges avec l'air ambiant A.

Nous allons maintenant décrire la mise en œuvre d'un procédé selon l'invention par un calculateur de freinage, dans un pneumatique présentant une architecture similaire à celle de la figure 1.

Le principe de résolution est le suivant : A chaque intervalle temporel fini *dt,* par exemple 1s, le calculateur de freinage actualise la charge moyenne par pneu et la vitesse par pneu. Il calcule les sources de chaleur par zone de matériau, et les coefficients d'échange aux parois. La température ambiante est éventuellement disponible ainsi que précédemment indiqué.

On intègre l'équation de la chaleur transitoire discrétisée pour la durée de *dt,* ce qui fournit une estimation de la température dans la section type : $\frac{\partial T}{\partial t} = \frac{\lambda}{\rho C}\frac{\partial^2 T}{\partial z^2} + \frac{P}{\rho C}$ Les inconnues sont les températures T (z,t) au temps t et à la profondeur z, comptée à partir de la surface externe dans la section (z=0) et la température du gaz de gonflage $T_G(t)$ au temps t.

Les conditions aux limites de flux du côté air ambiant sont $\Phi a = H_a(T(0, t)-T_a)$. Le coefficient d'échange $H_a$ à la paroi externe au droit de la section CC dépend de la vitesse v du véhicule et de $T_a$. Il vaut typiquement 50 W/m²/K à 80 km/h.

Et du coté gaz interne $\Phi_G = H_G(T(z_G, t) - T_G)$ ,

La température $T_G$ du gaz interne provient d'un capteur TPMS si disponible, sinon elle est estimée par la méthode décrite ci-après.

Les températures initiales sont établies à la température ambiante ou à une valeur par défaut.

Le gaz interne G de masse $m_G$ est considéré à température constante $T_G$. Il échange de la chaleur avec l'ensemble des parois délimitant le volume intérieur. $m_G C_V \frac{\partial T_G}{\partial t} = S_G H_i(T^* - T_G)$

Où $H_i$ est le coefficient d'échange entre la paroi interne et le gaz interne, $C_v$ est la capacité calorifique du volume, $S_G$ est la section, et $T^*$ est la température efficace de la paroi intérieure, définie comme une moyenne pondérée de la température ambiante $T_A$ et de la température $T(z_G)$ de la paroi interne de la section CC.

$$T^* = [\beta T(z_G) + (1 - \beta)T_A]$$

Typiquement β=0.12.

La section CC est discrétisée en tranches délimitées par des nœuds selon les méthodes classiques des éléments finis.

L'équation peut alors être résolue en utilisant un schéma de résolution d'Euler explicite comme suit en conservant un *dt* assez petit pour que le schéma soit stable ($\Delta t \ll (\Delta z/a)^{0.5}$ , où $\Delta z$ est le plus petit intervalle et *a* la diffusivité correspondante):

$$T_i^{k+1} = T_i^k + \frac{\Delta t}{\Delta x^2}\frac{\lambda_i^k}{\rho C_p}\left[T_{i+1}^k + T_{i-1}^k - 2T_i^k\right] + \frac{\Delta t P_i^k}{\rho C_p}$$

Avantageusement, si le calculateur embarqué dispose de suffisamment de mémoire et de puissance, d'autres schémas connus assurent une stabilité améliorée pour des intervalles *dt* grands (Crank-Nicolson, Adams-Moulton, Gear, Newmark).

Dans le cas où les intervalles d'épaisseur sont inégaux, l'estimation du laplacien ΔT se fait selon la méthode des éléments finis avec des fonctions de forme appropriées, par exemple des fonctions « chapeau ».

Il est alors possible d'établir une carte de température sur une séquence de roulage, telle que montrée en figure 4. La courbe du bas montre la vitesse du véhicule sur une séquence de roulage étudiée. La carte du haut montre la température interne du pneumatique sur cette même séquence de roulage. L'abscisse commune aux deux courbes montre le temps. La température du pneumatique est exprimée selon la profondeur, cette profondeur étant calculée par rapport à la surface de la bande de roulement.

Sur cet exemple on constate sur cette courbe qu'après 1650s, la vitesse du véhicule est nulle, et que le pneu refroidit. Le point chaud du pneumatique est situé approximativement à 11 mm dans la profondeur, ce qui signifie que c'est le matériau situé à cet endroit qui sera le plus sujet à vieillissement sur cette séquence.

A chaque intervalle *dt,* le profil de température trouvé sert à mettre à jour deux histogrammes : (a) le temps passé dans une classe de température et (b) le nombre de cycles de rotation de la roue dans une classe de température

L'histogramme (b) est exploité en effectuant une pondération : $Y = \sum_i \frac{n_i}{N_i}$ où les $n_i$ sont les effectifs des classes et $N_i$ sont des constantes caractéristiques de la classe de température $T_i$. On détermine un score $S_1 = \frac{\sum_i n_i}{Y}$ .

L'histogramme (a) est exploité selon une loi d'Arrhenius. Classiquement, la vitesse de vieillissement $w = A exp\left(\frac{-E}{RT}\right)$ où T est la température exprimée en °K, E est une énergie d'activation typiquement entre 40 et 80 kJ/mol, R est la constante des gaz parfaits et A une constante. Le score $S_2 = \frac{\int w.dt}{\int dt}$ .

Le système peut également fournir un score $S_3$ en lien avec l'efficacité énergétique du pneu, car la résistance au roulement d'un pneu est plus faible quand il est assez chaud. Ce score est construit avec l'histogramme (b) en pondérant des dissipations $d_i$ par cycles fonction de la température $T_i$ de la classe i selon leur fréquence d'occurrence : $S_3 = \Sigma_i d_i n_i / \Sigma_i n_i$. Ce score est particulièrement utile pour caractériser un usage en régime transitoire prépondérant.

Le calculateur embarqué tient à jour les histogrammes. Le calcul des scores peut avoir lieu en débarqué, dans un logiciel ou un serveur de diagnostic.

Avantageusement, le modèle de pneu est connu du système embarqué ou débarqué pour appliquer des paramètres spécifiques au lieu de génériques.

## Revendications

1. Procédé d'estimation de la sévérité de conditions d'utilisation d'un pneumatique installé sur un véhicule, le procédé comprenant les étapes suivantes :

   • Une étape de mesure de la vitesse du véhicule et de la charge du véhicule,
   • Une étape d'évaluation, en fonction des mesures effectuées, de la puissance des dissipations thermiques internes du pneumatique,
   • Une étape de détermination, en fonction de cette puissance, de la température interne du pneumatique,
   **caractérisé par** :
   • Une étape d'enregistrement du nombre de tours de roue effectués et/ou du temps passé dans des conditions d'utilisation correspondant à un intervalle de température donné.

2. Procédé selon la revendication 1, comprenant une étape de mesure de la température ambiante, et le procédé étant tel que cette température ambiante est prise en compte pour l'évaluation de la puissance thermique.

3. Procédé selon les revendications 1 ou 2, comprenant une étape de mesure de la température de la jante sur laquelle est installé le pneu.

4. Procédé d'estimation selon l'une des revendications précédentes, comprenant une étape de mise à zéro des enregistrements effectués lorsque l'installation d'un nouveau pneumatique est détectée.

5. Procédé selon l'une des revendications précédentes comprenant en outre des moyens pour déterminer, en fonction des enregistrements effectués, la nécessité d'une maintenance ou d'une inspection des pneumatiques.

6. Système d'estimation de la sévérité de conditions d'utilisation d'un pneumatique installé sur un véhicule routier, le système comprenant un calculateur de freinage comportant :

   • Des moyens de mesure de la vitesse du véhicule et de la charge du véhicule,
   • Des moyens d'évaluation, en fonction des mesures effectuées, de la puissance des dissipations thermiques internes du pneumatique,
   • Des moyens de détermination, en fonction de cette puissance, de la température interne du pneumatique, et

   **caractérisé en ce que** : le système comprend en outre des moyens d'enregistrement du nombre de tours de roue effectués et/ou du temps passé dans des conditions d'utilisation correspondant à un intervalle de température donné.

7. Système selon la revendication 6 comprenant en outre un capteur de température ambiante installé dans le calculateur de freinage.

8. Système selon l'une des revendications 6 ou 7, comprenant en outre un capteur de température de la jante sur laquelle est installé le pneumatique.

9. Système selon l'une des revendications 6 à 8 comprenant des moyens d'alerte du conducteur ou d'un utilisateur du véhicule de la nécessité d'une maintenance ou d'une inspection des pneumatiques.


**Patentansprüche**

1. Verfahren zur Feststellung der Schwere von Betriebsbedingungen eines Reifens, der an einem Fahrzeug montiert ist, wobei das Verfahren die folgenden Schritte beinhaltet:

   • einen Schritt des Messens der Geschwindigkeit des Fahrzeugs und der Beladung des Fahrzeugs,
   • einen Schritt des Ermittelns, in Abhängigkeit von den durchgeführten Messungen, der Leistung der internen Wärmeableitungen des Reifens,
   • einen Schritt des Bestimmens, in Abhängigkeit von dieser Leistung, der Innentemperatur des Reifens, **gekennzeichnet durch**:

      • einen Schritt des Aufzeichnens der Anzahl an erfolgten Radumdrehungen und/oder der verstrichenen Zeit unter Betriebsbedingungen, die einem gegebenen Temperaturbereich entsprechen.

2. Verfahren nach Anspruch 1, das einen Schritt des Messens der Umgebungstemperatur beinhaltet, und wobei das Verfahren derart ist, dass diese Umgebungstemperatur bei der Ermittlung der Wärmeleistung berücksichtigt wird.

3. Verfahren nach Anspruch 1 oder 2, das einen Schritt des Messens der Temperatur der Felge beinhaltet, auf der der Reifen montiert ist.

4. Verfahren zur Feststellung nach einem der vorhergehenden Ansprüche, das einen Schritt des Zurücksetzens der durchgeführten Aufzeichnungen beinhaltet, wenn die Montage eines neuen Reifens erkannt wird.

5. Verfahren nach einem der vorhergehenden Ansprüche, das ferner Mittel zum Bestimmen der Notwendigkeit einer Wartung oder einer Inspektion der Reifen in Abhängigkeit von den durchgeführten Aufzeichnungen beinhaltet.

6. System zur Feststellung der Schwere von Betriebsbedingungen eines Reifens, der an einem Straßenfahrzeug montiert ist, wobei das System einen Bremsrechner beinhaltet, der Folgendes umfasst:

   • Mittel zum Messen der Geschwindigkeit des Fahrzeugs und der Beladung des Fahrzeugs,
   • Mittel zum Ermitteln, in Abhängigkeit von den durchgeführten Messungen, der Leistung der internen Wärmeableitungen des Reifens,
   • Mittel zum Bestimmen, in Abhängigkeit von dieser Leistung, der Innentemperatur des Reifens, und

   **dadurch gekennzeichnet, dass**:

      das System ferner Mittel zum Aufzeichnen der Anzahl an erfolgten Radumdrehungen und/oder der verstrichenen Zeit unter Betriebsbedingungen, die einem gegebenen Temperaturbereich entsprechen, beinhaltet.

7. System nach Anspruch 6, das ferner einen Sensor für die Umgebungstemperatur beinhaltet, der in dem Bremsrechner installiert ist.

8. System nach einem der Ansprüche 6 oder 7, das ferner einen Sensor für die Temperatur der Felge beinhaltet, auf der der Reifen montiert ist.

9. System nach einem der Ansprüche 6 bis 8, das Mittel beinhaltet, die den Fahrer oder einen Nutzer des Fahrzeugs über die Notwendigkeit einer Wartung oder einer Inspektion der Reifen informieren.

**Claims**

1. Method for estimating the severity of conditions of use of a tyre installed on a vehicle, the method comprising the following steps:

   • a step of measuring the speed of the vehicle and the load of the vehicle,
   • a step of evaluating, as a function of the measurements performed, the power of the internal heat dissipations of the tyre,
   • a step of determining, as a function of this power, the internal temperature of the tyre, **characterised in that** a step of recording the number of wheel revolutions performed and/or the time spent in conditions of use corresponding to a given temperature interval.

2. Method according to Claim 1, comprising a step of measuring the ambient temperature, and the method being such that this ambient temperature is taken into account for the evaluation of the thermal power.

3. Method according to Claims 1 or 2, comprising a step of measuring the temperature of the rim on which the tyre is installed.

4. Estimation method according to one of the preceding claims, comprising a step of resetting the records to zero performed when the installation of a new tyre is detected.

5. Method according to one of the preceding claims, further comprising means for determining, as a function of the recordings made, the need for maintenance or an inspection of the tyres.

6. System for estimating the severity of conditions of use of a tyre installed on a road vehicle, the system comprising a braking computer comprising:

   • means for measuring the speed of the vehicle and the load of the vehicle,
   • means for evaluating, as a function of the measurements performed, the power of the internal heat dissipations of the tyre,
   • means for determining, as a function of this power, the internal temperature of the tyre, and

   **characterized in that** the system further comprises means for recording the number of wheel revolutions performed and/or the time spent in conditions of use corresponding to a given temperature interval.

7. System according to Claim 6, further comprising an ambient temperature sensor installed in the braking computer.

8. System according to one of Claims 6 or 7, further comprising a temperature sensor for sensing the temperature of the rim on which the tyre is installed.

9. System according to one of Claims 6 to 8, comprising means for alerting the driver or a user of the vehicle of the need for maintenance or an inspection of the tyres.

A

**Figure 1**

**Figure 2**

**Figure 3**

**Figure 4**

## RÉFÉRENCES CITÉES DANS LA DESCRIPTION

### Documents brevets cités dans la description

- WO 2008046766 A1
- US 2016229234 A1